# EUROPEAN PATENT SPECIFICATION

(11) **EP 2 461 199 B1**
(45) Date of publication and mention of the grant of the patent: **04.05.2016**
(21) Application number: 11189895.3
(22) Date of filing: 21.11.2011
(51) Int. Cl.: G02B 21/10, G02B 21/24, G02B 21/36, G06K 9/00, G06T 7/00

(54) **MICROSCOPE, REGION DETERMINING METHOD, AND PROGRAM**
MIKROSKOP, REGIONSBESTIMMUNGSVERFAHREN UND PROGRAMM
MICROSCOPE, PROCÉDÉ DE DÉTERMINATION DE RÉGIONS ET PROGRAMME

(30) Priority: 06.12.2010 JP 2010271355
(43) Date of publication of application: 06.06.2012
(73) Proprietor: Sony Corporation, Tokyo 108-0075 (JP)
(72) Inventor: Narusawa, Ryu, Minato-ku, Tokyo 108-0075 (JP); Matsunobu, Goh, Minato-ku, Tokyo 108-0075 (JP)
(74) Representative: D Young & Co LLP

(56) References cited:
- WO-A1-97/22946
- WO-A1-2010/106928

## Description

The present disclosure relates to a microscope, a method for acquiring images of a specimen, and a program that are capable of executing region determination processing for a specimen image.

In recent years, there has been known a system in which a magnified image of a cell, a tissue, etc. of a biological organism obtained by an optical microscope is digitalized and a doctor, a pathologist, etc. examines the tissue etc. and treats a patient based on the digital image. For example, by virtual slide apparatus, a preparation in which a tissue etc. of a biological organism is encapsulated is scanned and a digital image of the tissue etc. is created.

For example, Japanese Patent Laid-open No. 2010-197425 includes a description about a preparation used for observing a specimen such as a pathological cell by a microscope. As described in paragraph [0021] and FIG. 5 of this patent document, a specimen (4) is placed on slide glass (3) and cover glass (1) is overlaid with the intermediary of an encapsulant (5). Thereby, a preparation (6) is made.

When a digital image of a tissue etc. of a biological organism is created as described above, it is important to focus the microscope on the specimen encapsulated in the preparation. However, an air bubble is often generated between the slide glass and the cover glass when the preparation is made. In this case, it is difficult to focus the Microscope on the specimen when the preparation is scanned. Furthermore, for example when an automatic diagnosis is performed by digital data obtained by imaging, there is also a possibility that the air bubble part is erroneously included in the diagnosis-subject region and accurate diagnosis is precluded.

WO 97/22946 A1 discloses an imaging acquisition and professing method and system for coping with air bubbles sandwiched between the cover glass and the slide glass. A light source is used to illuminate the slide obliquely from above through a diffuser and acquire a 'bubble' image where the bubbles appear brighter than the specimen, maternal. An 'edge' image is also acquired using illumination parallel or nearly parallel to the upper surface of the slide, no diffuser being used. The cover glass edges appear bright in the edge image. Image processing then combines the bubble image with the edge image in order to obtain a boundary map of the areas of interest of the slide, i.e. the areas containing specimen material within the boundaries of the cover glass.

WO 2010/106928 A1 (re-published in English as EP 2410367 A1) discloses an imaging acquisition and processing method and system which identifies the positions of air bubbles that locally displace the encapsulant above the specimen, and adjusts the focus of the image acquisition apparatus, e.g. by about 5 µm, depending on whether an air bubble is being imaged or not.

In view of the above circumstances, it is desirable to provide a microscope, a method for acquiring images of a specimen, and a program that are capable of determining a region other than the region of air as the region of the subject of focusing processing even when some air regions are included in the preparation.

Various respective aspects and features of the invention are defined in the appended claims

The program may be recorded in a recording medium.

As described above, according to various embodiments of the present invention, a region other than the region of air can be determined as the region of the subject of focusing processing and so forth even when the air is included in a preparation.

Embodiments of the invention will now be described with reference to the accompanying drawings, throughout which like parts are referred to by like references, and in which:
FIG. 1 is a schematic diagram showing a configuration example of a Microscope according to a first embodiment of the present invention;
FIGS. 2A and 2B are schematic diagrams showing a configuration example of a preparation shown in FIG. 1;
FIG. 3 is a plan view schematically showing a stage shown in FIG. 1;
FIG. 4 is a diagram showing a state in which the preparation is placed on the stage shown in FIG. 3;
FIG. 5 is a schematic perspective view showing an illumination system for boundary detection as a dark-field illumination system according to the first embodiment;
FIG. 6 is a plan view showing the preparation in a state in which air enters between slide glass and cover glass;
FIG. 7 is a picture of a thumbnail image taken by irradiating the preparation shown in FIG. 6 with transmitted light by bright-field illumination;
FIG. 8 is a picture of a thumbnail image taken by irradiating the preparation shown in FIG. 6 with transmitted light by dark-field illumination for staining;
FIG. 9 is a picture of a thumbnail image taken by irradiating the preparation shown in Fig. 6 with dark-field illumination light by the illumination system for boundary detection according to the embodiment;
FIG. 10 is a block diagram schematically showing a configuration example of an overall controller shown in FIG. 1;
FIG. 11 is a flowchart showing an operation example of the microscope shown in FIG. 1;
FIG. 12 is a schematic sectional view of the preparation including an air bubble;
FIGS. 13A and 13B are pictures showing part of a magnified image of the preparation including an air bubble;
FIG. 14 is a flowchart showing processing of setting a region of interest and processing of taking magnified images of the region of interest according to the embodiment;
FIGS. 15A and 15B are plan views showing other examples of a dark-field image of the preparation;
FIG. 16 is a block diagram schematically showing a configuration example of a computer that functions as the overall controller shown in FIG. 1;
FIG. 17 is a flowchart showing processing of setting the region of interest and processing of taking magnified images of the region of interest according to a second embodiment of the present invention;
FIG. 18 is a diagram for explaining the processing of setting the region of interest, shown in FIG. 17;
FIG. 19 is a flowchart showing a modification example of the processing of the microscope shown in FIG. 14;
FIG. 20 is a flowchart showing a modification example of the processing of the microscope according to the second embodiment shown in FIG. 17; and
FIG. 21 is a schematic perspective view showing a modification example of the illumination system for boundary detection shown in FIG. 5.

Various embodiments of the present invention will be described below with reference to the drawings.

### <First Embodiment>

### [Microscope]

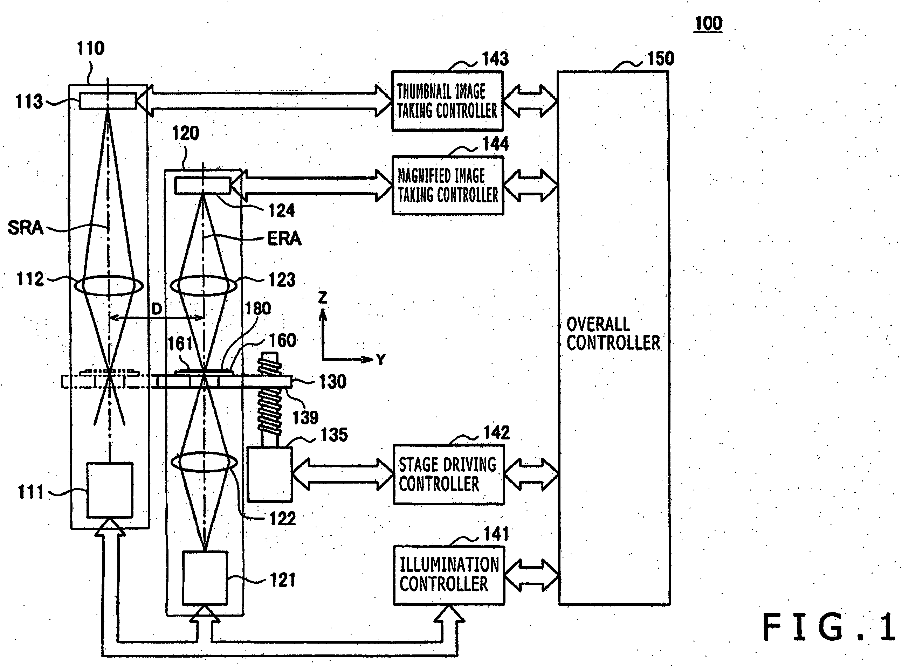

FIG. 1 is a schematic diagram showing a configuration example of a microscope 100 according to a first embodiment of the present invention. The microscope 100 has a thumbnail image taking unit 110 that takes a thumbnail image of the whole of a preparation 180 in which a biological sample a a specimen is encapsulated. Furthermore, the Microscope 100 has a magnified image taking unit 120 that takes a magnified image of the biological sample, obtained at a predetermined magnification. In the present embodiment, the thumbnail image taking unit 110 functions as the imaging unit.

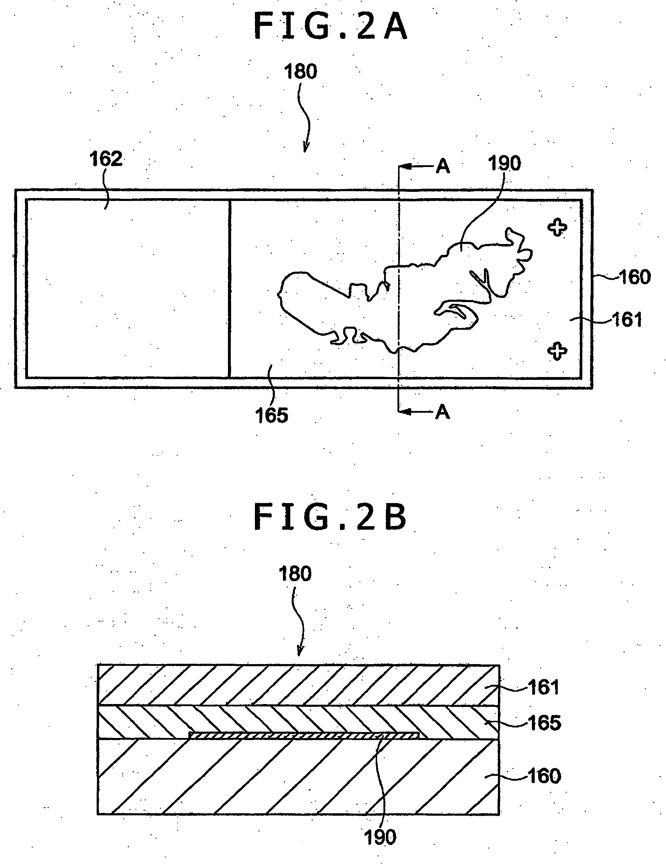

FIGS. 2A and 2B are schematic diagrams showing a configuration example of the preparation 180. FIG. 2A is a plan view of the preparation 180. FIG. 2B is a sectional view at a line along the shorter direction of the preparation 180 (sectional view along line A-A).

The preparation 180 is made by fixing a biological sample 190 to slide glass 160 by a predetermined fixing technique. In the present embodiment, the biological sample 190 is encapsulated between the slide glass 160 and cover glass 161 by using an encapsulant 165.

The biological sample 190 is composed of e.g. a tissue section of a connective tissue such as blood, an epithelial tissue, or these both tissues, or a smear cell. These tissue section and smear cell are subjected to various kinds of staining according to need. Examples of the staining include not only general staining typified by hematoxylin-eosin (HE) staining, Giemsa staining, and Papanicolaou staining but also fluorescent staining such as fluorescence in-situ hybridization (FISH) and enzyme antibody technique.

As the encapsulant 165, e.g. an agent prepared by dissolving a high molecular polymer in an aromatic organic solvent is used. However, the kind of encapsulant 165 is not particularly limited. An encapsulant containing a stain may be used.

As shown in FIG. 2A, a label 162 in which attendant information (e.g. the name of the person from which the sample is collected, the date and time of collection, and the kind of staining) for identifying the corresponding biological sample 190 is described may be attached to the preparation 180.

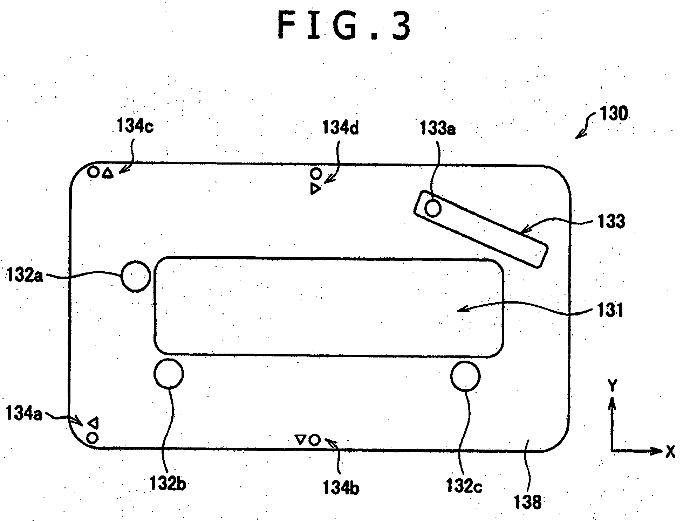

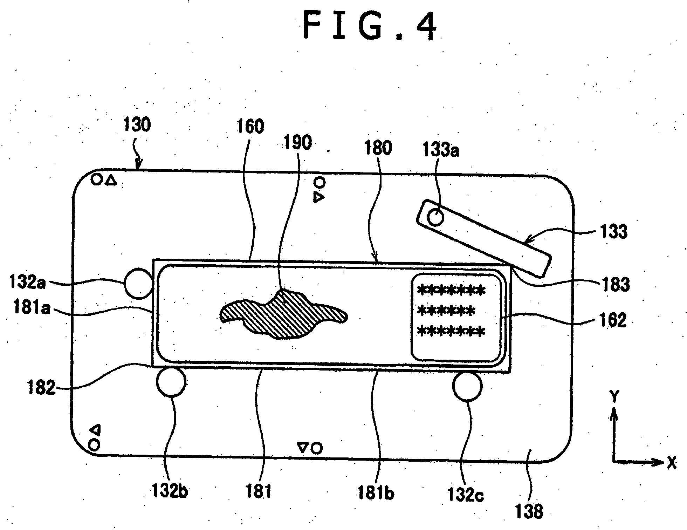

As shown in FIG. 1, the microscope 100 has a stage 130 on which the preparation 180 is placed. FIG. 3 is a plan view schematically showing the stage 130. FIG. 4 is a diagram showing the state in which the preparation 180 is placed on the stage 130.

As shown in FIG. 3, an aperture 131 having an area somewhat smaller than that of the preparation 180 is made in the stage 130. Around the aperture 131 of the stage 130, protrusions 132a to 132c to fix periphery 181 of the preparation 180 are provided.

The protrusion 132a supports a short side 181a of the preparation 180 placed on the stage 130 at a position corresponding to the aperture 131. The protrusions 132b and 132c support a long side 181b of the preparation 180. Furthermore, on the stage 130, a holding part 133 to support a corner 183 as the diagonally-opposite corner of a corner 182 between the short side 181a and the long side 181b is provided. As shown in FIG. 3 and FIG. 4, the holding part 133 is pivotable about a pivot point 133a and is biased toward the aperture 131.

Marks 134a to 134d for recognition of the position of the stage 130 are given on a placement surface 138 of the stage 130, on which the preparation 180 is placed. For example, images of the stage 130 are taken by the thumbnail image taking unit or the like. Based on the imaging positions of the marks 134a to 134d in this imaging, the position of the stage 130 is adjusted. As the marks 134a to 134d, e.g. pairs of marks of white circle and white triangle disposed with positional relationships different from each other are used.

As shown in FIG. 1, the microscope 100 has a stage driving mechanism 135 that moves the stage 130 in predetermined directions. By the stage driving mechanism 135, the stage 130 can be freely moved in directions parallel to the stage surface (X-axis-Y-axis directions) and the direction perpendicular to the stage surface (Z-axis direction).

The magnified image taking unit 120 has a light source 121, a condenser lens 122, an objective lens 123, and an imaging element 124. Furthermore, the magnified image taking unit 120 has a field stop (not shown) etc.

The light source 121 according to the present embodiment is provided on the side of a surface 139 on the opposite side to the placement surface 138 of the stage 130. By the light source 121, e.g. light to illuminate the biological sample 190 subjected to general staining (hereinafter, referred to also as bright-field illumination light or simply as illumination light) is irradiated. Alternatively, light to illuminate the biological sample 190 subjected to special staining (hereinafter, referred to as dark-field illumination light for staining) may be irradiated by a light source 121.

Alternatively, a unit capably of irradiating the bright-field illumination light and the dark-field illumination light for staining in a switching manner may be used as the light source 121. In this case, two kinds of light sources, i.e. a light source to irradiate the bright-field illumination light and a light source to irradiate the dark-field illumination light for staining, are provided as the light source 121. The light source 121 may be provided on the side of the placement surface 138 of the stage 130.

The condenser lens 122 condenses bright-field illumination light irradiated from the light source 121 and dark-field illumination light irradiated from the light source for dark-field illumination light for staining and guides the condensed light to the preparation 180 on the stage 130. This condenser lens 122 is disposed between the light source 121 and the stage 130 in such a manner that its optical axis ERA is the normal line to the reference position of the magnified image taking unit 120 on the placement surface 138 of the stage 130.

The objective lens 123 of a predetermined magnification is disposed on the side of the placement surface 138 of the stage 130 in such a manner that its optical axis ERA is the normal line to the reference position of the magnified image taking unit 120 on the placement surface 138 of the stage 130. Transmitted light passing through the preparation 180 placed on the stage 130 is condensed by this objective lens 123 and forms an image on the imaging element 124 provide on the backward side of the objective lens 123 (i.e. the side of the traveling destination of illumination light). In the magnified image taking unit 120, the biological sample 190 can be so imaged as to be magnified at various magnifications by accordingly changing the objective lens 123.

On the imaging element 124, an image in the imaging range having predetermined horizontal width and vertical width on the placement surface 138 of the stage 130 is formed. That is, part of the biological sample 190 is so imaged as to be magnified by the objective lens 123. The size of the imaging range is determined depending on the pixel size of the imaging element 124, the magnification of the objective lens 123, and so forth. The size of the imaging range is sufficiently smaller than that of the imaging range of imaging by the thumbnail image taking unit 110.

The thumbnail image taking unit 110 has the light source 111, an objective lens 112, and an imaging element 113. Furthermore, the thumbnail image taking unit 110 has an illumination system for boundary detection (not shown in FIG. 1) as the dark-afield illumination system according to the present embodiment. Details of this illumination system for boundary detection will be described later.

The light source 111 is provided on the side of the surface 139 on the opposite side to the placement surface 138 of the stage 130. As the light source 111, a light source to irradiate bright-field illumination light or a light source to irradiate dark-field illumination light for staining may be used. Alternatively, a light source to irradiate both in a switching manner may be used. The light source 111 may be provided on the side of the placement surface 138 of the stage 130.

The objective lens 112 of a predetermined magnification is disposed on the side of the placement surface 138 of the stage 130 in such a manner that its optical axis SRA is the normal line to the reference position of the thumbnail image taking unit 110 on the placement surface 138, on which the preparation 180 is placed. Transmitted light passing through the preparation 180 placed on the stage 130 is condensed by this objective lens 112 and forms an image on the imaging element 113 provided on the backward side of the objective lens 112 (i.e. the side of the traveling destination of illumination light).

On the imaging element 113, an image of light in the imaging range including the whole of the preparation 180 placed on the placement surface 138 (transmitted light passing through substantially the whole of the preparation 180) is formed. This image formed on the imaging element 113 is obtained as a thumbnail image, which is a microscope image obtained by imaging the whole of the preparation 180. Furthermore, by the imaging element 113, a thumbnail image of the preparation 180 irradiated with dark-field illumination light by the illumination system for boundary detection to be described later is taken.

As shown in FIG. 1, the magnified image taking unit 120 and the thumbnail image taking unit 110 are so disposed that the optical axis SRA and the optical axis ERA, which are the normal lines to the reference positions of the respective units, are separate from each other by distance D along the Y-axis direction. This distance D is so designed that a barrel (not shown) to hold the objective lens 123 of the magnified image taking unit 120 does not fall within the imaging range of the imaging element 113. On the other hand, the distance D is set as short as possible for size reduction of the microscope 100.

The above-described imaging elements 124 and 113 may be either a one-dimensional imaging element or a two-dimensional imaging element.

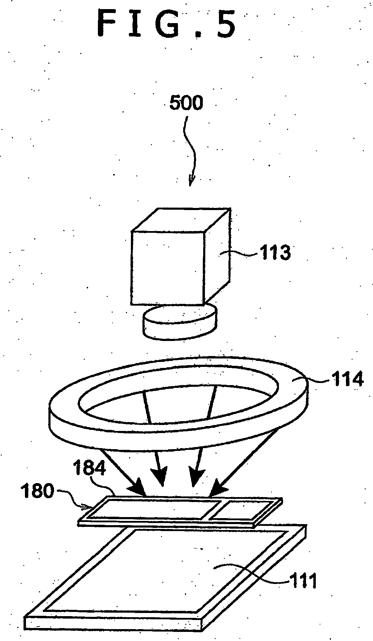

FIG. 5 is a schematic perspective view showing the illumination system for boundary detection as the dark-field illumination system according to the present embodiment. An illumination system 500 for boundary detection has a light emitting diode (LED) ring illuminator 114 that irradiates the preparation 180 with dark-field illumination light. The LED ring illuminator 114 is disposed between the preparation 180 placed on the stage 130 and the imaging element 113. That is, it is provided on the opposite side to the light source 111. The position and shape of the LED ring illuminator 114 are so designed that the dark-field illumination light can be irradiated obliquely from the side of an edge part 184 of the preparation 180.

The irradiation angle of the dark-field illumination light can be arbitrarily set. For example, the LED ring illuminator 114 may be provided at substantially the same level as that of the preparation. 180 in such a manner that the preparation 180 is included in the ring. Furthermore, the dark-field illumination light may be irradiated from almost just beside the preparation 180.

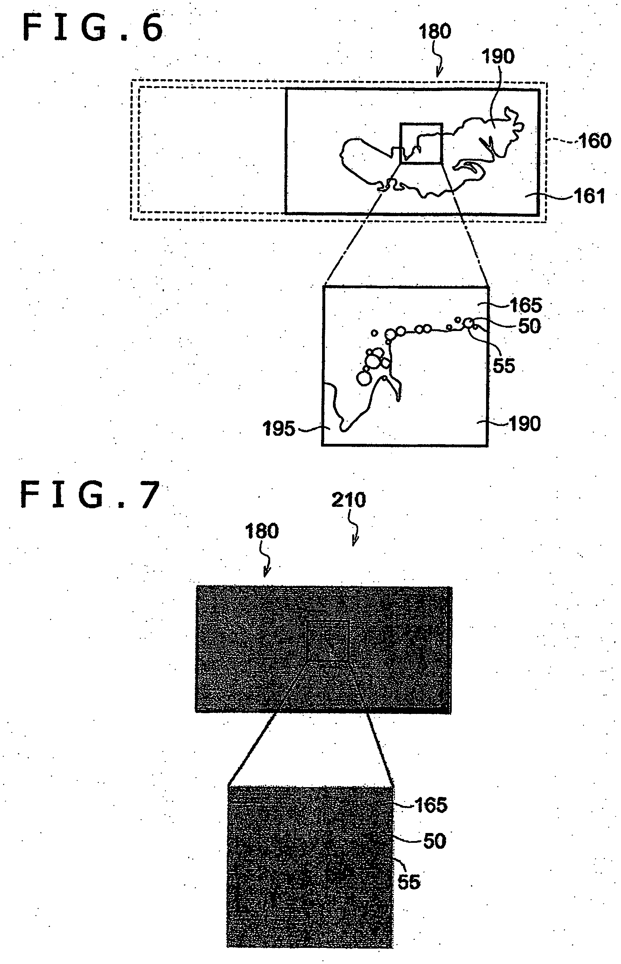

A description will be made below about a thumbnail image of the preparation 180 irradiated with the dark-field illumination light by the illumination system 500 for boundary detection according to the present embodiment. FIGS. 6 to 9 are diagrams for this description.

As shown in FIG. 6, when the biological sample 190 is encapsulated in the preparation 180, air enters between the slide glass 160 and the cover glass 161 and air bubbles 50 are generated in some cases.

FIG. 7 is a picture of a thumbnail image 210 taken by irradiating this preparation 180 with transmitted light by bright-field illumination. As shown in FIG. 7, the contrast at a boundary 55 between the encapsulant 165 and the air bubble 50 is low. Therefore, it is difficult to detect this boundary 55.

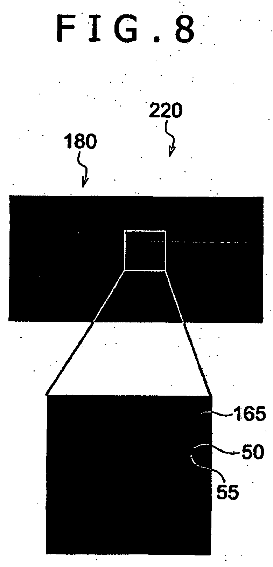

FIG. 8 is a picture of a thumbnail image 220 taken by irradiating this preparation 180 with transmitted light by dark-field illumination for staining. As shown in FIG. 8, also in this thumbnail image 220, the contrast at the boundary 55 between the encapsulant 165 and the air bubble 50 is low and it is difficult to detect this boundary 55.

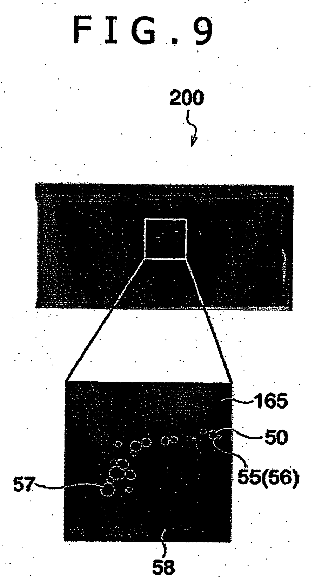

FIG. 9 is a picture of a thumbnail image 200 taken by irradiating dark-field illumination light by the illumination system 500 for boundary detection according to the present embodiment. This thumbnail image 200 is taken as a dark-field image. As shown in FIG. 9, in the thumbnail image 200, the contrast at the boundary 55 between the encapsulant 165 and the air bubble 50 is accentuated. This is because the dark-field illumination light is scattered at the boundary 55 between the encapsulant 165 and the air bubble 50 and an image of the scattered light and so forth is formed on the imaging element 113.

As a general light characteristic, light having a short wavelength is readily scattered (i.e. the scattering rate is high) and light having a long wavelength is difficult to be scattered (i.e. the scattering rate is low). The scattering in which then scattering rate differs depending on the wavelength is called the Rayleigh scattering. The scattering rate of the Rayleigh scattering is in inverse proportion to the fourth power of the wavelength. When light is scattered to a larger extent, the difference in the change in the scattering rate can be image as the difference in the contrasting density of the light at a higher degree and thus the boundary 55 can be detected more clearly. Therefore, short-wavelength light having a high scattering rate (e.g. blue, violet, or white light) may be used as the dark-field illumination light. However, the wavelength of the dark-field illumination light can be arbitrarily set.

In the present embodiment, LED illumination is used as the illumination system for boundary detection. However, the illumination system is not limited thereto. For example, laser light may be used as the dark-field illumination system.

As shown in FIG. 1, the microscope 100 is connected with controllers for controlling the respective blocks of the microscope 100. For example, the microscope 100 is connected with an illumination controller 141 for controlling various kinds of light sources possessed by the microscope 100, including the light source 111, the light source 121, and the LED ring illuminator 114. The stage driving mechanism 135 is connected with a stage driving controller 142.

A thumbnail image taking controller 143 is connected to the imaging element 113 for taking a thumbnail image, and a magnified image taking controller 144 is connected to the imaging element 124 for taking a magnified image of the biological sample 190. These controllers are connected to the respective blocks of the microscope 100 via various kinds of data communication paths.

As shown in FIG. 1, an overall controller 150 to control the whole of the Microscope 100 is separately provided in the microscope, 100. The above-described various kinds of controllers are connected to the overall controller 150 via various kinds of data communication paths. The overall controller 150 functions as the region determiner and so forth.

The respective controllers and the overall controller 150 are realized by a central processing unit (CPU), a read only memory (ROM), a random access memory (RAM), a storage device such as a hard disk drive (HDD), a communication device, an arithmetic circuit, etc.

When information indicating the method for illuminating the biological sample 190 is output from the overall controller 150 to the illumination controller 141, the illumination controller 141 carries out irradiation control of the corresponding light source based on the information. For example, if illumination light is to be irradiated by the light source 111 of the thumbnail image taking unit 110, the illumination controller 141 refers to the information of the illuminating method and determines the imaging mode. Specifically, the illumination controller 141 determines which of the following modes is to be carried but: the mode in which a bright-field image should be acquired (hereinafter, referred to also as the bright-field mode) and the mode in which a dark-field image should be acquired (hereinafter, referred to also as the dark-field mode).

The illumination controller 141 sets the parameters associated with the mode for the light source 111 and makes the light source 111 irradiate illumination light suitable for the mode. Thereby, the illumination light emitted from the light source 111 is irradiated to the biological sample 190 via the aperture 131 of the stage 130. Examples of the parameters set by the illumination controller 141 include the intensity of the illumination light and selection of the kind of light source.

If illumination light is to be irradiated by the light source 121 of the magnified image taking unit 120, the illumination controller 141 refers to the information of the illuminating method and determines whether the bright-field mode or the dark-field mode is to be carried out. The illumination controller 141 sets the parameters associated with the mode for the light source 121 and makes illumination light suitable for the mode be irradiated from the light source 121. Thereby, the illumination light emitted from the light source 121 is irradiated to the biological sample 190 via the aperture 131 of the stage 130.

The irradiation light in the bright-field mode is typically visible light. The irradiation light in the dark-field mode is typically light including such a wavelength as to be capable of exciting a fluorescent marker used in special staining. In the dark-field mode, the background part of the fluorescent marker is cut out.

When information indicating the method for imaging the biological sample 190 is output from the overall controller 150 to the stage driving controller 142, the stage driving controller 142 controls the stage driving mechanism 135 based on the information. For example, information indicating that a thumbnail image of the biological sample 190 is to be taken is output from the overall controller 150 to the stage driving controller 142. In response to this information, the stage driving controller 142 controls driving of the stage driving mechanism 135 and moves the stage 130 in stage surface directions (X-Y-axes directions). The stage 130 is so moved that the whole of the preparation 180 falls within the imaging range of the imaging element 113. Furthermore, the stage driving controller 142 moves the stage 130 in the direction perpendicular to the stage surface (Z-axis direction, depth direction of the biological sample 190) for focusing processing of the objective lens 112.

When information indicating that a magnified image of the biological sample 190 is to be taken is output from the overall controller 150, the stage driving controller 142 moves the stage 130 from the thumbnail image taking unit 110 to the magnified image taking unit 120. The stage 130 is moved in the stage surface directions in such a manner that the biological sample 190 is disposed at a position between the condenser lens 122 and the objective lens 123. Furthermore, the stage 130 is so moved that a predetermined part of the biological sample 190 is disposed in the imaging range of imaging by the imaging element 124. Moreover, the stage driving controller 142 moves the stage 130 in the Z-axis direction for focusing processing of the objective lens 123.

The thumbnail image taking controller 143 sets the parameters associated with the bright-field mode or the dark-field mode in the imaging element 113. Furthermore, the thumbnail image taking controller 143 outputs image data about a thumbnail image based on an output signal about an image formed on the image forming plane of the imaging element 113. Examples of the parameters set by the thumbnail image taking controller 143 include the start timing and end timing of exposure.

The magnified image taking controller 144 sets the parameters associated with the bright-field mode or the dark-field mode in the imaging element 124. Furthermore, the magnified image taking controller 144 outputs image data about a magnified image based on an output signal about an image formed on the image forming plane of the imaging element 124. This image data is output to the overall controller 150.

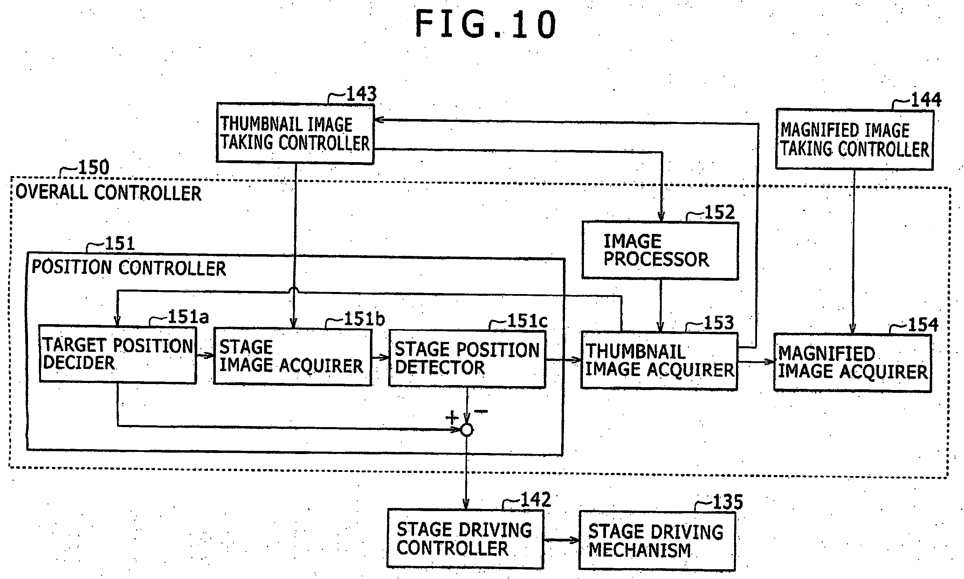

FIG. 10 is a block diagram schematically showing a configuration example of the overall controller 150. The overall controller 150 includes a position controller 151, an image processor 152, a thumbnail image acquirer 153, and a magnified image acquirer 154.

The position controller 151 executes position control processing to move the stage 130 to the target position. The position controller 151 has a target position decider 151a, a stage image acquirer 151b, and a stage position detector 151c.

If a thumbnail image is acquired, the target position of the stage 130 is decided by the target position decider 151a. The target position of the stage 130 is set to such a position that the whole of the preparation 180 falls within the imaging range of the imaging element 113.

The stage image acquirer 151b drives the light source 111, a light source to illuminate the marks 134a to 134d, and so forth via the illumination controller 141. Subsequently, the stage image acquirer 151b acquires stage images of the whole imaging range of the imaging by the imaging element 113 at predetermined timing intervals via the thumbnail image taking controller 143.

The stage position detector 151c calculates the correlation value between the respective pixels of the acquired stage images and shape data of the marks 134a to 134d stored in a HDD (storage device) in advance. Then, the stage position detector 151c calculates the positions of the marks 134a to 134d in the stage images. Based on the positions of the respective marks in these stage images, the actual position of the stage 130 is detected by utilizing e.g. a correspondence table stored in the HDD.

The position controller 151 calculates the difference between the target position decided by the target position decider 151a and the position of the stage 130 detected by the stage position detector 151c. Then, the position controller 151 outputs this difference to the stage driving controller 142.

The stage driving controller 142 controls the stage driving mechanism 135 in accordance with the difference supplied from the position controller 151 and moves the stage 130 to the target position. The position controller 151 is capable of outputting information of the difference to the stage driving controller 142 every time the stage image taken by the imaging element 113 is acquired.

The image processor 152 according to the present embodiment executes various kinds of processing based on a thumbnail image output from the thumbnail image taking controller 143. For example, the image processor 152 detects the boundary 55 between the air bubble 50 and the encapsulant 165 based on the thumbnail image 200 obtained by illumination by the illumination system 500 for boundary detection, like that shown in FIG. 9. Furthermore, the image processor 152 determines a region other than an air layer region 51 that is the region of the air bubble 50 as a region of interest 195 for the biological sample 190 (see FIG. 6). Details of these kinds of processing will be described later.

By the image processor 152, a subject region from which plural magnified images are taken may be set. Furthermore, by the image processor 152, an image of the label 162 attached to the preparation 180 may be acquired and noise due to a foreign matter in the preparation 180 and so forth may be removed. The data, parameters, and so forth created by the image processor 152 are output to the thumbnail image acquirer 153 and the magnified image acquirer 154.

The thumbnail image acquirer 153 requests the thumbnail image taking controller 143 to take a thumbnail image under various kinds of setting conditions based on e.g. user's operation for the microscope 100. The request for taking of a thumbnail image may be automatically made when the preparation 180 is placed on the stage 130.

The thumbnail image acquirer 153 may store the data of a thumbnail image output from the image processor 152 in a predetermined storage part. Alternatively, thumbnail image data may be output to an image data storage server or the like provided at the external via a communication part (not shown) by the thumbnail image acquirer 153.

Then magnified image acquirer 154 requests the magnified image taking controller 144 to take a magnified image under various kinds of setting conditions based on e.g. user's operation for the microscope 100. The request for taking of a magnified image may be automatically made after a thumbnail image of the preparation 180 is taken.

The magnified image acquirer 154 may store the data of a magnified image output from the magnified image taking controller 144 in the predetermined storage part. Alternatively, magnified image data may be output to the image data storage server or the like provided at the external via the communication part (not shown) by the magnified image acquirer 154.

### <Operation of Microscope>

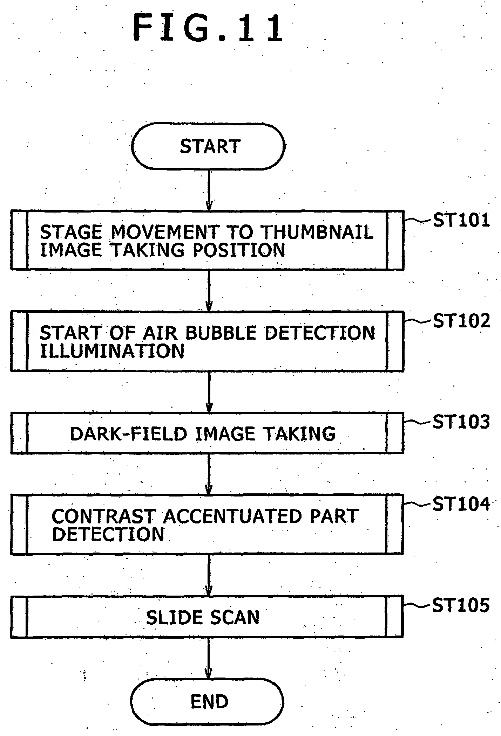

FIG. 11 is a flowchart showing an operation example of the microscope 100 according to the present embodiment. The stage 130 is moved to a position between the light source 111 and the objective lens 112 of the thumbnail image taking unit 110 (step 101). The preparation 180 is irradiated with dark-field illumination light by the LED ring illuminator 114 of the illumination system 500 for boundary detection (step 102). A dark-field image of the preparation 180 is taken (step 103). Thereby, the thumbnail image 200 like that shown in FIG. 9 is created. The irradiation of the dark-field illumination light may be turned off after the thumbnail image 200 is taken.

An accentuated part 56 at which the contrast is accentuated is detected in the taken thumbnail image 200 (step 104). This accentuated part 56 is detected as the boundary 55 between the encapsulant 165 and the air bubble 50 in the preparation 180.

The accentuated part 56 is detected based on e.g. the luminance values of the respective pixels of the thumbnail image 200. For example, part whose luminance value is larger than a threshold set in advance may be detected as the accentuated part 56. Alternatively, the accentuated part 56 may be detected by using a frequency component or a standard deviation. Besides that, the method for detecting the accentuated part 56 of the contrast can be arbitrarily set.

The region other than the air layer region 51, which is the region of the air bubble 50, is determined as the region of interest 195 for the biological sample 190 based on information of the detected boundary 55 between the encapsulant 165 and the air bubble 50. Then, focusing processing and so forth is accordingly executed for the region of interest 195 and the preparation 180 is scanned (step 105).

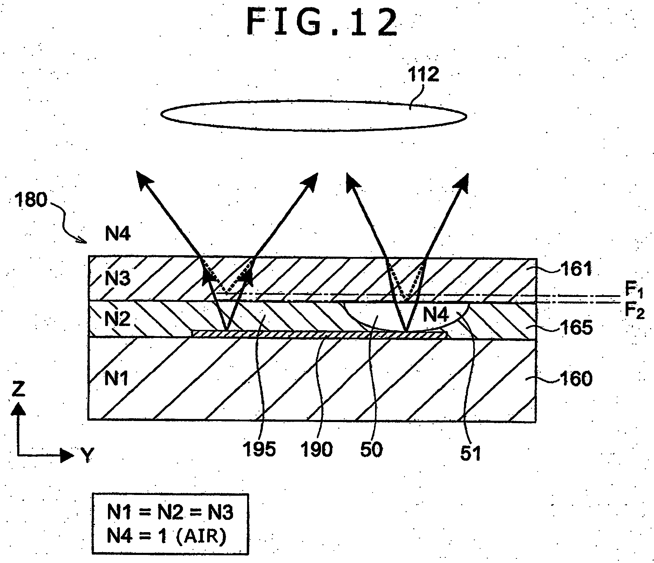

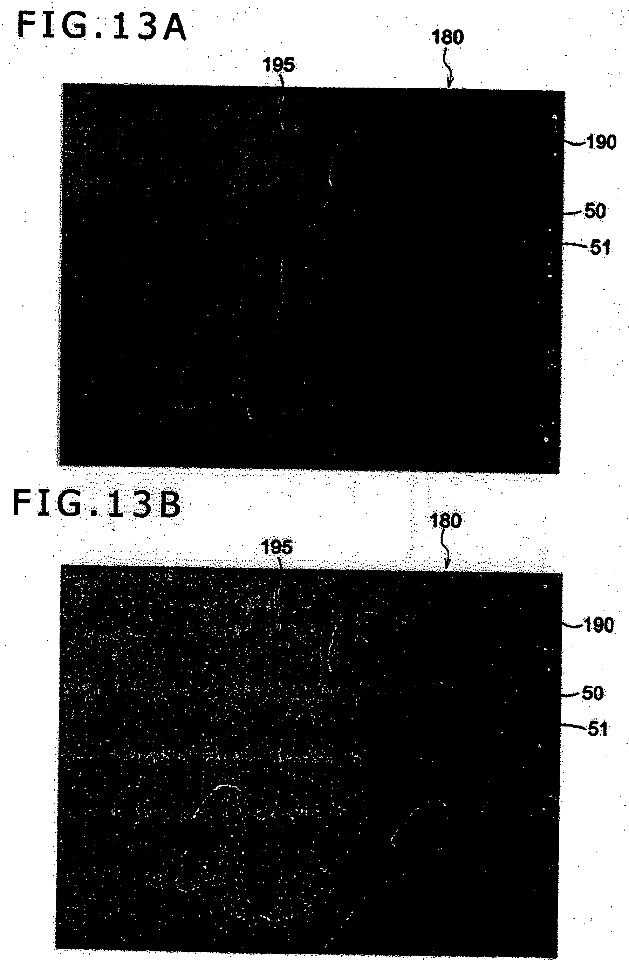

FIG. 12 and FIGS. 13A and 13B are diagrams for explaining the focusing processing for the preparation 180. FIG. 12 is a schematic sectional view of the preparation 180 including the air bubble 50. FIGS. 13A and 13B are pictures showing part of a magnified image of the preparation 180 including the air bubble 50.

In the present embodiment, the thumbnail image taking unit 110 and the magnified image taking unit 120 have an autofocus mechanism as the focusing processing unit. The in-focus position is calculated by the autofocus mechanism and the focus is placed based on this in-focus position.

As shown in FIG. 12, the biological sample 190 is encapsulated between the slide glass 160 and the cover glass 161 by the encapsulant 165. An air bubble is generated between the slide glass 160 and the cover glass 161. Here, the value of the refractive index N₄ of the external of the preparation 180 (air) and the inside of the air bubble 50 is defined as 1. Suppose that the refractive index N₁ of the slide glass 160, the refractive index N₂ of the encapsulant 165, and the refractive index N₃ of the cover glass 161 are almost equal to each other. Furthermore, suppose that the value of these refractive indexes is larger than that of the refractive index of the air, e.g. 1.5.

As shown in FIG. 12, the focus is placed based on an in-focus position F₁ when the focusing processing is executed for the region of interest 195, where the air bubble 50 does not exist. FIG. 13A shows a picture obtained when the focusing processing is executed for the region of interest 195.

On the other hand, the focus is placed based on an in-focus position F₂ when the focusing processing is executed for the air layer region 51 in the air bubble 50. The in-focus position F₂ is different from the in-focus position F₁ due to the difference between the value of the refractive index N₄ of the air layer region 51 and the value of the refractive indexes N₁ to N₃ of the cover glass and so forth. As shown in FIG. 12, the in-focus position F₂ is a position deeper than the in-focus position F₁, i.e. a position remoter from the objective lens 112 in the Z-axis direction. FIG. 13B shows a picture obtained when the focusing processing is executed for the air layer region 51 in the air bubble 50.

As just described, if the air bubble 50 enters the preparation 180, it is difficult to focus the microscope on the region of interest 195 as the subject of a diagnosis and so forth when the preparation 180 is scanned. Furthermore, for example when an automatic diagnosis is performed based on a taken magnified image, possibly accurate diagnosis is precluded due to inclusion of the part of the air bubble 50 in the region of the diagnosis subject. In addition, there will also be an adverse effect that the size of the digital data of created magnified images and so forth becomes large uselessly due to photographing of a meaningless part in the air bubble 50.

In the microscope 100 according to the present embodiment, the preparation 180 in which the biological sample 190 is encapsulated is irradiated with dark-field illumination light by the illumination system 500 for boundary detection. Then, the thumbnail image 200 of the preparation 180 is taken as a dark-field image. In the dark-field image, the accentuated part 56 due to scattered light at the boundary 55 between the air bubble 50 and the encapsulant 165 in the preparation 180 is photographed. Therefore, the accentuated part 56 can be detected as the boundary 55. As a result, the region other than the air layer region 51 in the air bubble 50 in the preparation 180 can be determined as the region of interest 195, which is the subject of focusing processing and so forth. Furthermore, accurate diagnosis is realized by excluding the air layer region 51 from the diagnosis subject of the automatic diagnosis and employing the region of interest 195 as the diagnosis subject. In addition, because imaging of the air layer region 51 can be omitted, the size of created digital data can be reduced and burden on the processing resources can be alleviated.

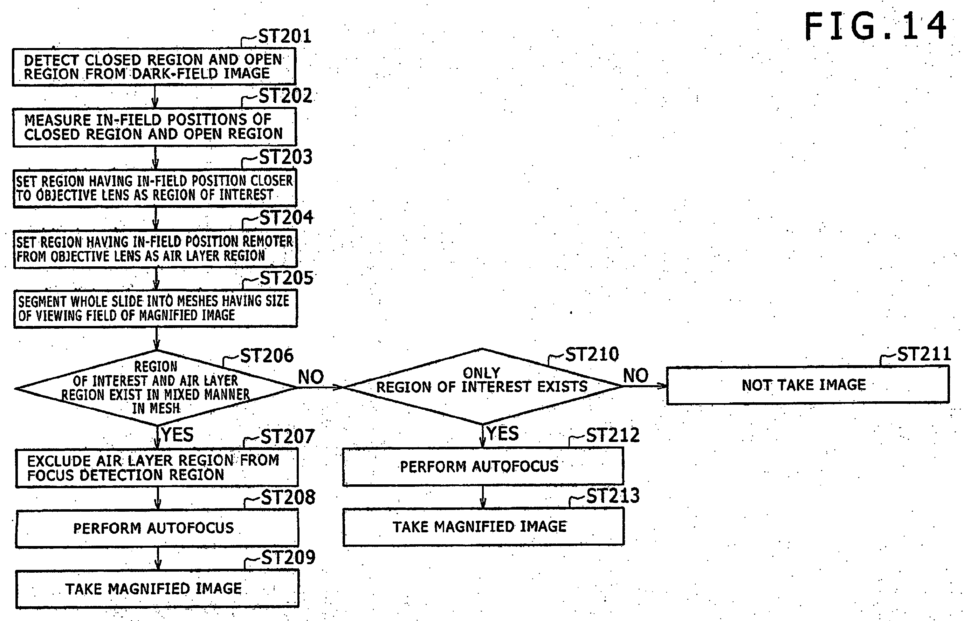

A detailed description will be made below about the method for setting the region of interest 195 from the thumbnail image 200 (hereinafter, referred to also as the dark-field image 200) of the preparation 180 irradiated with dark-field illumination light by the illumination system 500 for boundary detection. FIG. 14 is a flowchart showing processing of setting the region of interest 195 and processing of taking magnified images of the region of interest 195.

Closed region and open region are detected from the dark-field image 200 of the preparation 180 (step 201). As shown in FIG. 9, the accentuated part 56 works as the region line forming a closed region 57. That is, in the present embodiment, the accentuated part 56 forming the closed region 57 in the dark-field image 200 is detected as the boundary 55 between the air bubble 50 and the encapsulant 165. The region that is not the closed region 57 is detected as an open region 58.

For example, if a dust etc. adheres to the preparation 180, possibly scattered light is generated at this adherent part. In this case, possibly part that is not the boundary 55 between the air bubble 50 and the encapsulant 165 is photographed as the accentuated part 56 in the dark-field image 200. However, in the present embodiment, the accentuated part 56 forming the closed region 57 is detected as the boundary 55. This allows easy detection of the boundary 55 between the air bubble 50 and the encapsulant 165.

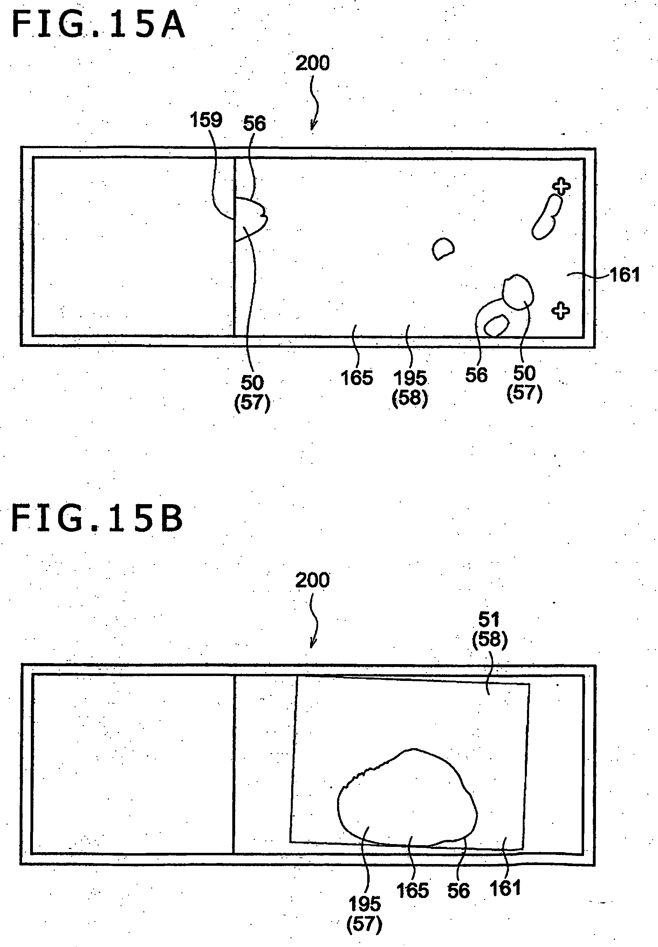

FIGS. 15A and 15B are plan views showing other examples of the dark-field image 200 of the preparation 180. In FIG. 15A, the encapsulant 165 is provided across substantially the whole of the cover glass 161 and plural air bubbles 50 are generated. That is, the closed region 57 formed by the accentuated part 56 is the air bubble 50 and the open region 58 is the region of interest 195.

In FIG. 15B, the encapsulant 165 is dropped at a region corresponding to one part in the cover glass 161. That is, in FIG. 15B, the closed region 57 formed by the accentuated part 56 is the region of interest 195. The open region 58 is the air layer region 51.

As shown in FIGS. 15A and 15B, the closed region 57 mentioned here includes also a region formed by the accentuated part 56 and an edge part 159 of the slide glass 160 or the cover glass 161. In this case, the ratio of the edge part 159 to the accentuated part 56 forming the closed region 57 may be calculated. For example, if the ratio of the edge part 159 is higher than a predetermined value, it may be determined that this region is not the closed region 57. Besides that, the closed region 57 may be determined based on the shape of the accentuated part 56, the length of the accentuated part 56, and so forth.

In this manner, whether the closed region 57 or the open region 58 corresponds to the region of interest 195 differs depending on the way of providing the encapsulant 165. Therefore, in the present embodiment, the in-focus position of each of the set closed region 57 and open region 58 is measured (step 202).

The region whose in-focus position is closer to the objective lens 112 (in-focus position F₁ shown in FIG. 12) is set as the region of interest 195 (step 203). The region whose in-focus position is remoter from the objective lens 112 (in-focus position F₂ shown in FIG. 12) is set as the air layer region 51 (step 204).

In this manner, in the present embodiment, the closed region 57 and the open region 58, in other words, the inside region of the closed region 57 and the outside region, are compared with each other. Then, either one region is set as the region of interest 195 based on the comparison result. This allows the region of interest 195 to be surely determined.

The whole of the preparation 180 is segmented with the size of the viewing field of a magnified image. Specifically, the preparation 180 is segmented into a mesh manner with the size of the imaging range for taking a magnified image (step 205). Thereby, plural photographing areas imaged by the magnified image taking unit 120 are defined.

About each photographing area (each mesh), whether or not the region of interest 195 and the air layer region 51 exist in a mixed manner in the photographing area is determined (step 206). If it is determined that both regions 195 and 51 exist in a mixed manner (Yes of the step 206), the air layer region 51 is excluded from the focus detection region as the subject of the focusing processing (step 207). That is, the region of interest 195 is set as the focus detection region.

Autofocus processing is executed based on the region of interest 195 set as the focus detection region (step 208). A magnified image of the photographing area is taken based on the calculated in-focus position (step 209).

If it is determined in the step 206 that the region of interest 195 and the air layer region 51 do not exist in a mixed manner in the photographing area, whether only the region of interest 195 exists in the photographing area is determined in a step 210. If it is determined that the region of interest 195 does not exist in the photographing area (No of the step 210), a magnified image of this photographing area is not taken (step 211).

If it is determined in the step 210 that only the region of interest 195 exists in the photographing area, the autofocus processing is executed based on this region of interest 195 (step 212). A magnified image of the photographing area is taken based on the calculated in-focus position (step 213).

When the processing shown in FIG. 14 is executed about all photographing areas, the processing of taking magnified images of the preparation 180 in which the biological sample 190 is encapsulated is ended.

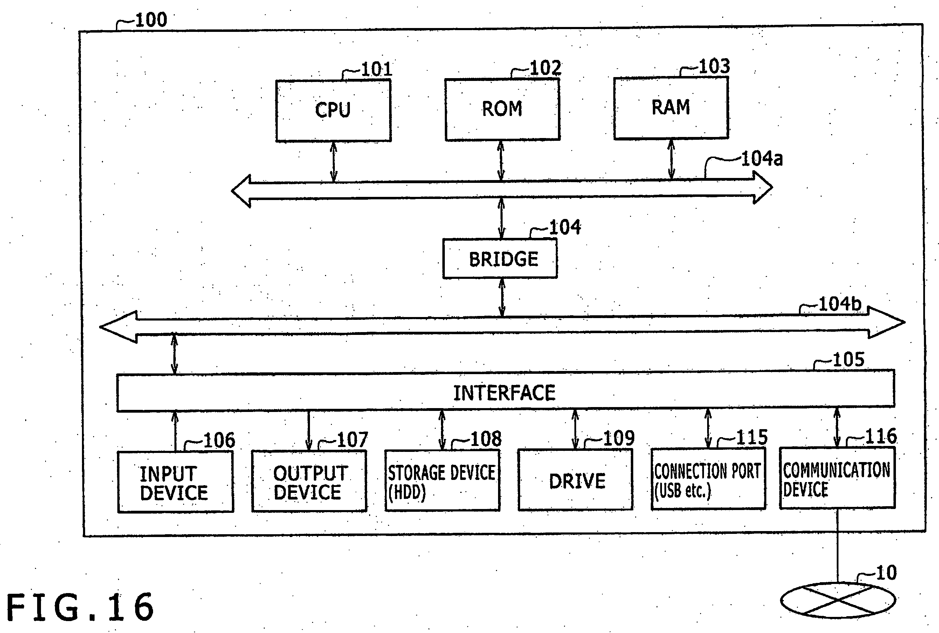

FIG. 16 is a block diagram schematically showing a configuration example of a computer that functions as the overall controller 150 according to the present embodiment. Processing by the overall controller 150 may be executed by hardware or executed by software.

The overall controller 150 includes a CPU 101, a ROM 102, a RAM 103, and a host bus 104a. Furthermore, the overall controller 150 includes a bridge 104, an external bus 104b, an interface 105, an input device 106, an output device 107, a storage device (HDD) 108, a drive 109, a connection port 115, and a communication device 116.

The CPU 101 functions as arithmetic processing device and control device, and controls general operation in the overall controller 150 in accordance with various kinds of programs. The CPU 101 may be a microprocessor.

The ROM 102 stores programs used by the CPU 101, arithmetic parameters, and so forth. The RAM 103 temporarily stores a program used in execution by the CPU 101, parameters that accordingly change in this execution, and so forth. These units are connected to each other by the host bus 104a composed of a CPU bus and so forth.

The host bus 104a is connected to the external bus 104b such as a peripheral component interconnect/interface (PCI) bus via the bridge 104. The host bus 104a, the bridge 104, and the external bus 104b do not necessarily need to be separately configured, and these functions may be implemented in one bus.

The input device 106 is composed of input units for information input by the user, such as mouse, keyboard, touch panel, and button, an input control circuit that generates an input signal based on the input by the user and outputs the input signal to the CPU 101, and so forth.

The output device 107 includes, for example, a display device such as a liquid crystal display (LCD) device or an organic light emitting diode (OLED) device and an audio output device such as a speaker.

The storage device 108 is one example of the storage part of the overall controller 150 and is a device for data storage. The storage device 108 includes e.g. a storage medium, a recording device that records data in the storage medium, a reading device that reads out data from the storage medium, and a deleting device that deletes data recorded in the storage medium. The storage device 108 drives a hard disk and stores programs run by the CPU 101 and various kinds of data.

The drive 109 is a reader/writer for a storage medium and is provided as a built-in drive or an external drive of the overall controller 150. The drive 109 reads out information recorded in a loaded removable recording medium such as a magnetic disk, an optical disk, a magnetooptical disk, or a semiconductor memory and outputs the information to the RAM 103.

The connection port 115 is an interface connected to external apparatus and is a connection port with external apparatus capable of data transmission by e.g. the universal serial bus (USB).

The communication device 116 is a communication interface composed of e.g. a communication device for connection to a communication network 10. The communication device 116 may be a communication device for a wireless local area network (LAN), a communication device for wireless USB, or a wired communication device to perform wired communication. ,

### <Second Embodiment>

A microscope according to a second embodiment of the present invention will be described below. In the following, description of part whose configuration and operation are similar to those of the part in the microscope 100 of the first embodiment is omitted or simplified.

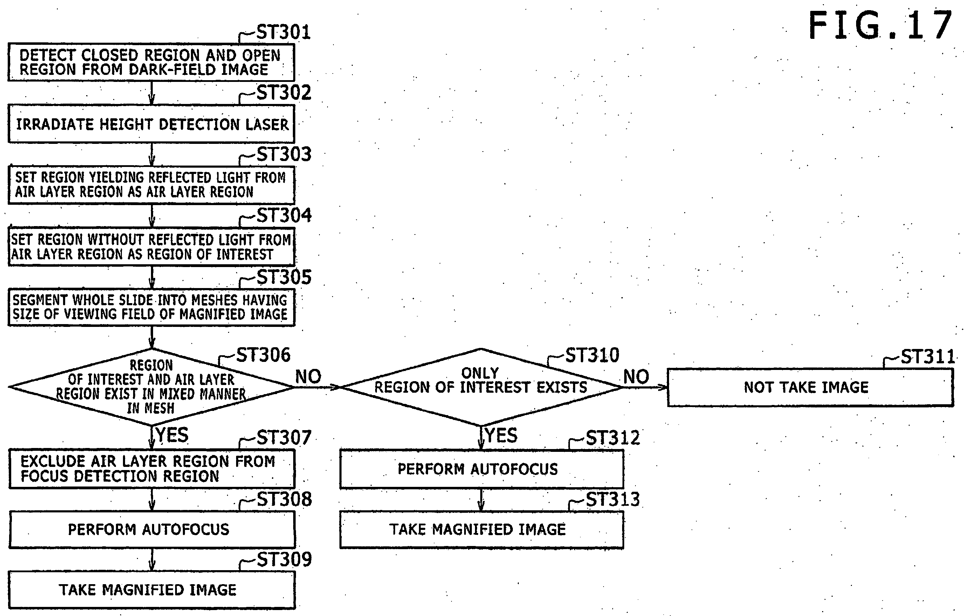

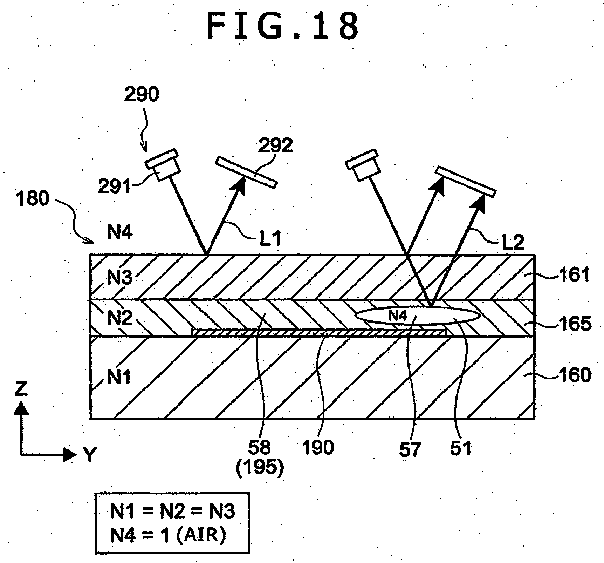

FIG. 17 is a flowchart showing processing of setting the region of interest according to the present embodiment and processing of taking magnified images of the region of interest. FIG. 18 is a diagram for explaining the processing of setting the region of interest, shown in FIG. 17.

In the microscope according to the present embodiment, the processing of setting the region of interest, executed in steps 302 to 304 shown in FIG. 17, is different from the processing by the microscope 100 according to the first embodiment. A step 301 and steps 305 to 313 shown in FIG. 17 are the same as the step 201 and the steps 205 to 213 shown in FIG. 14.

As shown in FIG. 18, the microscope according to the present embodiment has a height detector 290 that detects the height of the preparation 180 on the basis of the placement surface of the stage (size in the Z-axis direction), i.e. the thickness of the preparation 180. The height detector 290 has an irradiator 291 that irradiates the cover glass of the preparation 180 with laser light and a reflected light detecting sensor 292 that detects reflected light L₁ reflected by the cover glass 161. The height of the preparation 180 is detected based on the time until the reflected light L₁ from the cover glass 161 is detected, the irradiation angle, and so forth.

Each of the closed region 57 and the open region 58 detected in the step 301 is irradiated with the laser light for height detection (step 302). As shown in FIG. 18, if the air layer region 51 exists between the slide glass 160 and the cover glass 161, reflected light L₂ from the air layer region 51 is detected by the reflected light detecting sensor 292 of the height detector 290. The closed region 57 or the open region 58 from which the reflected light L₂ is detected is set as the air layer region 51 (step 303). The closed region 57 or the open region 58 from which this reflected light is not detected is set as the region of interest 195 (step 304).

In this manner, in the present embodiment, the region of interest 195 is set based on whether or not the reflected light L₂ from the air layer region 51 is present. A laser light irradiator or the like may be individually provided as a mechanism for setting the region of interest 195. In the present embodiment, the reflected light L₂ of the air layer region 51 is detected by the height detector 290 for detecting the height of the preparation 180. This can suppress the cost without the need to provide an additional mechanism. Furthermore, this is advantageous in size reduction of the microscope.

### <Modification Examples>

Embodiments of the present invention are not limited to the above-described embodiments but variously modified.

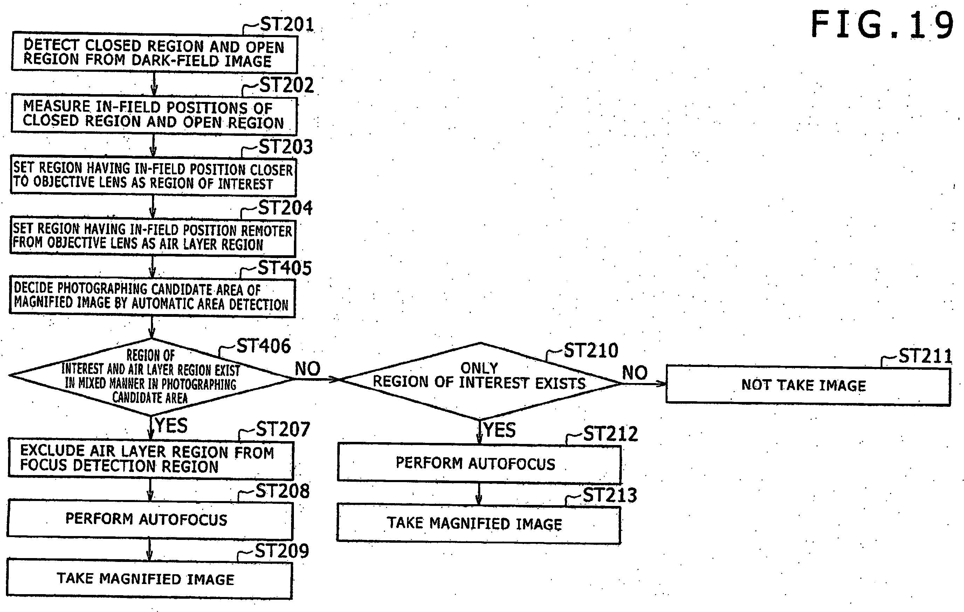

FIG. 19 is a flowchart showing a modification example of the processing of the microscope 100 shown in FIG. 14. In this modification example, processing of steps 405 and 406 shown in FIG. 19 is different from the processing shown in FIG. 14. The other steps are the same as those shown in FIG. 14.

In the step 405, automatic area detection processing is executed. Thereby, candidates for photographing areas imaged by the magnified image taking unit 120 are decided. For example, the area where a biological sample exists is automatically detected based on a thumbnail image of the preparation 180 irradiated with bright-field illumination light. The area where the biological sample exists is segmented into plural photographing areas and thereby the photographing candidate areas are decided. Besides that, the method for calculating position information of the biological sample, the method for deciding the photographing candidate area, and so forth may be arbitrarily set.

It is determined whether or not the region of interest and the air layer region exist in a mixed manner in each of the photographing candidate areas decided in the step 405 (step 406). Subsequently, the processing of the above-described steps 207 to 213 is executed.

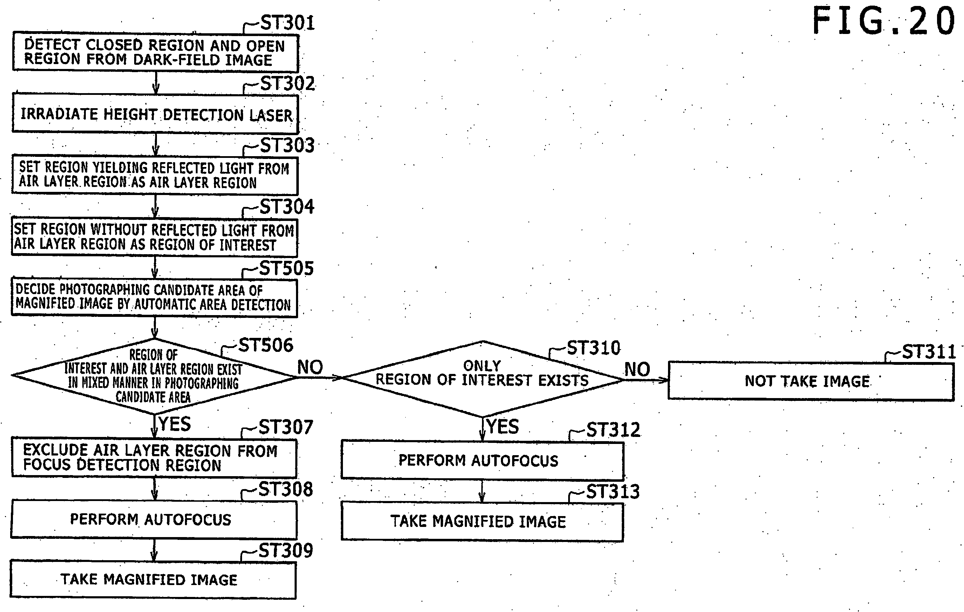

FIG. 20 is a flowchart showing a modification example of the processing of the microscope according to the second embodiment shown in FIG. 17. Also in this modification example, the automatic area detection processing is executed in a step 505, so that the photographing candidate areas are decided. Subsequently, in a step 506, it is determined whether or not the region of interest and the air layer region exist in a mixed manner in each photographing candidate area. Processing of the other steps is the same as that shown in FIG. 17.

By the automatic area detection processing and the photographing candidate area decision processing shown in FIG. 19 and FIG. 20, taking of a magnified image of the part where the biological sample does not appear can be omitted. As a result, burden of the processing of acquiring the magnified image is alleviated and the efficiency of the acquisition of the magnified image can be enhanced.

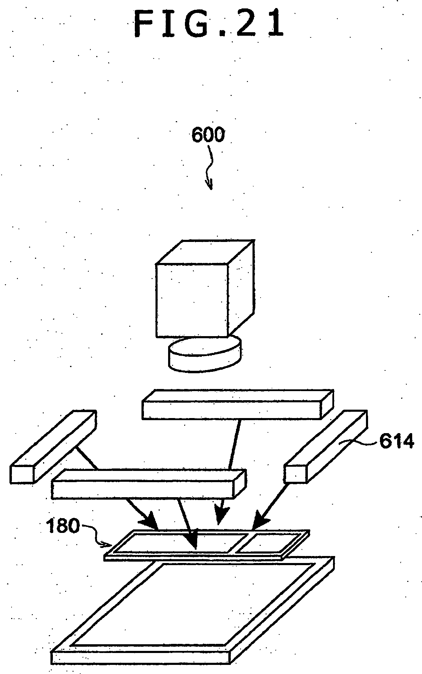

FIG. 21 is a schematic perspective view showing a modification example of the illumination system 500 for boundary detection shown in FIG. 5. This illumination system 600 for boundary detection has four LED bar illuminators 614 instead of the LED ring illuminator 114 shown in FIG. 5. The preparation 180 is irradiated with dark-field illumination light by these LED bar illuminators 614. In this manner, one or plural LED bar illuminators 614 may be used. Another configuration may be employed as the illumination system for boundary detection.

In the first embodiment, the region of interest 195 is set based on the in-focus positions F₁ and F₂ in the closed region 57 and the open region 58.. In the second embodiment, whether or not the air layer region 51 is present is determined based on the reflection status of detection light irradiated to each of the closed region 57 and the open region 58, and the region of interest 195 is determined. However, the method for determining the region of interest 195 is not limited to these methods and may be arbitrarily set. For example, a bright-field image of each region 57 or 58 may be taken and the region of interest 195 may be determined based on the average of the luminance value of the respective images, the standard deviation, and so forth. Alternatively, the region of interest 195 may be determined based on a frequency component of a bright-field image of each region 57 or 58.

In the above description, focusing processing is executed based on the determined region of interest 195 and thereby a proper magnified image is taken. However, processing with use of the determined region of interest 195 is not limited to the focusing processing. For example, the region of interest 195 may be utilized as the region of the diagnosis subject. Alternatively, the region of interest 195 may be utilized as a detection-light-irradiated region for detecting the thickness of the preparation 180. Besides that, the processing with use of the region of interest 195 is accordingly executed by the microscope according to the present embodiment. Information of the boundary 55 between the air layer region 51 and the encapsulant 165 in the preparation 180 may be accordingly utilized for various kinds of processing.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

While a preferred embodiment of the disclosed technique has been described using specific terms, such description is for illustrative purposes only, and it is to be understood that changes and variations may be made without departing from the scope of the following claims.

## Claims

1. A microscope comprising:
a dark-field illumination system configured to irradiate dark-field illumination light to a preparation in which a specimen (190) is encapsulated between a slide glass (160) and a cover glass (161) by using an encapsulant (165);
an thumbnail imaging unit (110) configured to take a dark-field thumbnail image (200) of the preparation irradiated with the dark-field illumination light; and
a region determiner (150) configured to:
detect a boundary (55) between the encapsulant (165) and air (50) included between the slide glass and the cover glass based on the taken dark-field thumbnail image, wherein said boundary divides the dark-field thumbnail image into a closed region (57) and an open region (58);
compare an inside region of the closed region and an outside region and determine either one region as a region of interest (195) and the other region as an air layer region (51);
subdivide the dark-field thumbnail image into segments (ST205; ST305; ST405; ST505); and
acquire a magnified image for each segment in turn, wherein the focus is set independently for each segment according to the following:
if the region of interest and air layer region exist in mixed manner in the segment, then exclude the air layer region from the focus detection region (ST206-209; ST306-309; ST406, ST207-209; ST506, ST307-309),
if only the region of interest exists in the segment, then focus without any regional specificity (ST210-213; ST310-313; ST410-413; ST510-513), and
if the region of interest does not exist in the segment, then do not acquire a magnified image of that segment (ST211; ST311; ST211; ST311).

2. The microscope according to claim 1, further comprising
a focusing processing unit (110, 120) configured to calculate an in-focus position in the inside region and an in-focus position in the outside region,
wherein
the region determiner (150) compares the calculated in-focus positions of the inside and outside regions and determines the region of interest.

3. The microscope according to claim 1, further comprising:
an irradiator (291) configured to irradiate detection light to each of the inside region and the outside region; and
a reflected light detector (292) configured to detect reflected light of the detection light irradiated to the inside and outside regions,
wherein
the region determiner (150) determines whether reflected light reflected by the region of the air is included in reflected light of each of the inside and outside regions, detected by the reflected light detector, and determines the region of interest based on a determination result.

4. A method for acquiring images of a specimen, comprising:
irradiating dark-field illumination light to a preparation in which a specimen (190) is encapsulated between a slide glass (160) and a cover glass (161) by using an encapsulant (165);
taking a dark-field thumbnail image (200) of the preparation irradiated with the dark-field illumination light; and
detecting with a region determiner (150) a boundary (55) between the encapsulant (165) and air (50) included between the slide glass and the cover glass based on the taken dark-field thumbnail image, wherein said boundary divides the dark-field thumbnail image into a closed region (57) and an open region (58);
comparing an inside region of the closed region and an outside region and determining either one region as a region of interest (195) and the other region as an air layer region (51);
subdividing the dark-field thumbnail image into segments (ST205; ST305; ST405; ST505); and
acquiring a magnified image for each segment in turn, wherein the focus is set independently for each segment according to the following:
if the region of interest and air layer region exist in mixed manner in the segment, then exclude the air layer region from the focus detection region (ST206-209; ST306-309; ST406, ST207-209; ST506, ST307-309),
if only the region of interest exists in the segment, then focus without any regional specificity (ST210-213; ST310-313; ST410-413; ST510-513), and
if the region of interest does not exist in the segment, then do not acquire a magnified image of that segment (ST211; ST311; ST211; ST311).

5. A program for causing a microscope equipped with a computer to execute processing comprising:
irradiating dark-field illumination light to a preparation in which a specimen (190) is encapsulated between a slide glass (160) and a cover glass (161) by using an encapsulant (165);
taking a dark-field thumbnail image (200) of the preparation irradiated with the dark-field illumination light; and
detecting with a region determiner (150) a boundary (55) between the encapsulant (165) and air (50) included between the slide glass and the cover glass based on the taken dark-field thumbnail image, wherein said boundary divides the dark-field thumbnail image into a closed region (57) and an open region (58);
comparing an inside region of the closed region and an outside region and determining either one region as a region of interest (195) and the other region as an air layer region (51);
subdividing the dark-field thumbnail image into segments (ST205; ST305; ST405; ST505); and
acquiring a magnified image for each segment in turn, wherein the focus is set independently for each segment according to the following:
if the region of interest and air layer region exist in mixed manner in the segment, then exclude the air layer region from the focus detection region (ST206-209; ST306-309; ST406, ST207-209; ST506, ST307-309),
if only the region of interest exists in the segment, then focus without any regional specificity (ST210-213; ST310-313; ST410-413; ST510-513), and
if the region of interest does not exist in the segment, then do not acquire a magnified image of that segment (ST211; ST311; ST211; ST311).

## Patentansprüche

1. Mikroskop, das Folgendes umfasst:
ein Dunkelfeldbeleuchtungssystem, das konfiguriert ist zum Abstrahlen von Dunkelfeldbeleuchtungslicht auf ein Präparat, in dem eine Probe (190) zwischen einem Objektträgerglas (160) und einem Deckglass (161) unter Verwendung eines Kapselungsmittels (165) gekapselt ist;
eine Vorschaubildgebungseinheit (110), die konfiguriert ist zum Aufnehmen eines Dunkelfeldvorschaubilds (200) des mit dem Dunkelfeldbeleuchtungslicht bestrahlten Präparats; und
einen Regionsbestimmer (150), der konfiguriert ist zum:
Detektieren einer Grenze (55) zwischen dem Kapselungsmittel (165) und zwischen dem Objektträgerglas und dem Deckglas enthaltener Luft (50) auf der Basis des aufgenommenen Dunkelfeldvorschaubilds, wobei die Grenze das Dunkelfeldvorschaubild in ein geschlossenes Gebiet (57) und ein offenes Gebiet (58) unterteilt;
Vergleichen eines inneren Gebiets des geschlossenen Gebiets und eines äußeren Gebiets und Bestimmen entweder eines Gebiets als ein relevantes Gebiet (195) und des anderen Gebiets als ein Luftschichtgebiet (51);
Unterteilen des Dunkelfeldvorschaubilds in Segmente (ST205; ST305; ST405; ST505); und
Erfassen eines vergrößerten Bilds nacheinander für jedes Segment, wobei die Scharfeinstellung gemäß Folgendem unabhängig für jedes Segment eingestellt wird:
falls das relevante Gebiet und das Luftschichtgebiet in dem Segment auf gemischte Weise existieren, dann Ausschließen des Luftschichtgebiets von dem Scharfeinstellungsdetektionsgebiet (ST206-209; ST306-309; ST406, ST207-209; ST506, ST307-309),
falls nur das relevante Gebiet im Segment existiert, dann Scharfeinstellen ohne irgendeine regionale Spezifität (ST210-213; ST310-313; ST410-413; ST510-513), und
falls das relevante Gebiet nicht im Segment existiert, dann Nichterfassen eines vergrößerten Bilds dieses Segments (ST211; ST311; ST211; ST311).

2. Mikroskop nach Anspruch 1, weiterhin umfassend:
eine Scharfeinstellverarbeitungseinheit (110, 120), die konfiguriert ist zum Berechnen einer Scharfeinstellposition im inneren Gebiet und einer Scharfeinstellposition im äußeren Gebiet,
wobei
der Regionsbestimmer (150) die berechneten Scharfeinstellpositionen des inneren und äußeren Gebiets vergleicht und das relevante Gebiet bestimmt.

3. Mikroskop nach Anspruch 1, das weiterhin Folgendes umfasst:
einen Strahler (291), der konfiguriert ist zum Abstrahlen von Detektionslicht auf jedes des inneren Gebiets und des äußeren Gebiets; und
einen Reflektiertes-Licht-Detektor (292), der konfiguriert ist zum Detektieren von reflektiertem Licht des auf das innere und äußere Gebiet abgestrahlten Detektionslichts,
wobei
der Regionsbestimmer (150) bestimmt, ob reflektiertes Licht, das durch das Gebiet der Luft reflektiert wird, in reflektiertem Licht von jedem des inneren und äußeren Gebiets enthalten ist, detektiert durch den Reflektiertes-Licht-Detektor, und das relevante Gebiet auf der Basis eines Bestimmungsergebnisses bestimmt.

4. Verfahren zum Erfassen von Bildern einer Probe, das Folgendes umfasst:
Abstrahlen von Dunkelfeldbeleuchtungslicht auf ein Präparat, in dem eine Probe (190) zwischen einem Objektträgerglas (160) und einem Deckglass (161) unter Verwendung eines Kapselungsmittels (165) gekapselt ist;
Aufnehmen eines Dunkelfeldvorschaubilds (200) des mit dem Dunkelfeldbeleuchtungslicht bestrahlten Präparats; und
Detektieren, mit einem Regionsbestimmer (150), einer Grenze (55) zwischen dem Kapselungsmittel (165) und zwischen dem Objektträgerglas und dem Deckglas enthaltener Luft (50) auf der Basis des aufgenommenen Dunkelfeldvorschaubilds, wobei die Grenze das Dunkelfeldvorschaubild in ein geschlossenes Gebiet (57) und ein offenes Gebiet (58) unterteilt;
Vergleichen eines inneren Gebiets des geschlossenen Gebiets und eines äußeren Gebiets und Bestimmen entweder eines Gebiets als ein relevantes Gebiet (195) und des anderen Gebiets als ein Luftschichtgebiet (51);
Unterteilen des Dunkelfeldvorschaubilds in Segmente (ST205; ST305; ST405; ST505); und
Erfassen eines vergrößerten Bilds nacheinander für jedes Segment, wobei die Scharfeinstellung gemäß Folgendem unabhängig für jedes Segment eingestellt wird:
falls das relevante Gebiet und das Luftschichtgebiet in dem Segment auf gemischte Weise existieren, dann Ausschließen des Luftschichtgebiets von dem Scharfeinstellungsdetektionsgebiet (ST206-209; ST306-309; ST406, ST207-209; ST506, ST307-309),
falls nur das relevante Gebiet im Segment existiert, dann Scharfeinstellen ohne irgendeine regionale Spezifität (ST210-213; ST310-313; ST410-413; ST510-513), und
falls das relevante Gebiet nicht im Segment existiert, dann Nichterfassen eines vergrößerten Bilds dieses Segments (ST211; ST311; ST211; ST311).

5. Programm, um zu bewirken, dass ein mit einem Computer ausgestattetes Mikroskop eine Verarbeitung ausführt, umfassend:
Abstrahlen von Dunkelfeldbeleuchtungslicht auf ein Präparat, in dem eine Probe (190) zwischen einem Objektträgerglas (160) und einem Deckglass (161) unter Verwendung eines Kapselungsmittels (165) gekapselt ist;
Aufnehmen eines Dunkelfeldvorschaubilds (200) des mit dem Dunkelfeldbeleuchtungslicht bestrahlten Präparats; und
Detektieren, mit einem Regionsbestimmer (150), einer Grenze (55) zwischen dem Kapselungsmittel (165) und zwischen dem Objektträgerglas und dem Deckglas enthaltener Luft (50) auf der Basis des aufgenommenen Dunkelfeldvorschaubilds, wobei die Grenze das Dunkelfeldvorschaubild in ein geschlossenes Gebiet (57) und ein offenes Gebiet (58) unterteilt;
Vergleichen eines inneren Gebiets des geschlossenen Gebiets und eines äußeren Gebiets und Bestimmen entweder eines Gebiets als ein relevantes Gebiet (195) und des anderen Gebiets als ein Luftschichtgebiet (51);
Unterteilen des Dunkelfeldvorschaubilds in Segmente (ST205; ST305; ST405; ST505); und
Erfassen eines vergrößerten Bilds nacheinander für jedes Segment, wobei die Scharfeinstellung gemäß Folgendem unabhängig für jedes Segment eingestellt wird:
falls das relevante Gebiet und das Luftschichtgebiet in dem Segment auf gemischte Weise existieren, dann Ausschließen des Luftschichtgebiets von dem Scharfeinstellungsdetektionsgebiet (ST206-209; ST306-309; ST406, ST207-209; ST506, ST307-309),
falls nur das relevante Gebiet im Segment existiert, dann Scharfeinstellen ohne irgendeine regionale Spezifität (ST210-213; ST310-313; ST410-413; ST510-513), und
falls das relevante Gebiet nicht im Segment existiert, dann Nichterfassen eines vergrößerten Bilds dieses Segments (ST211; ST311; ST211; ST311).

## Revendications

1. Microscope, comprenant :
un système d'éclairage en fond noir configuré pour exposer à une lumière d'éclairage en fond noir une préparation dans laquelle un spécimen (190) est encapsulé entre une lamelle porte-objet (160) et une lamelle couvre-objet (161) au moyen d'un agent d'encapsulation (165) ;
une unité de formation d'image vignette (110) configurée pour prendre une image vignette en fond noir (200) de la préparation exposée à la lumière d'éclairage en fond noir ; et
une unité de détermination de régions (150) configurée pour :
détecter une limite (55) entre l'agent d'encapsulation (165) et l'air (50) compris entre la lamelle porte-objet et la lamelle couvre-objet à partir de l'image vignette en fond noir prise, ladite limite divisant l'image vignette en fond noir en une région fermée (57) et une région ouverte (58) ;
comparer une région intérieure de la région fermée et une région extérieure et déterminer l'une ou l'autre région comme une région digne d'intérêt (195) et l'autre région comme une région de lame d'air (51) ;
subdiviser l'image vignette en fond noir en segments (ST205 ; ST305 ; ST405 ; ST505) ; et
acquérir une image agrandie successivement pour chaque segment, la mise au point s'effectuant indépendamment pour chaque segment en fonction de ce qui suit :
si la région digne d'intérêt et la région de lame d'air sont présentes sous forme mixte dans le segment, exclure alors la région de lame d'air de la région de détection de mise au point (ST206-209 ; ST306-309 ; ST406, ST207-209 ; ST506, ST307-309),
si seule la région digne d'intérêt est présente dans le segment, effectuer alors la mise au point sans aucune spécificité régionale (ST210-213 ; ST310-313 ; ST410-413 ; ST510-513), et
si la région digne d'intérêt n'est pas présente dans le segment, ne pas acquérir alors une image agrandie de ce segment (ST211 ; ST311 ; ST211 ; ST311).

2. Microscope selon la revendication 1, comprenant en outre :
une unité de traitement de mise au point (110, 220) configurée pour calculer une position au point dans la région intérieure et une position au point dans la région extérieure,
dans lequel
l'unité de détermination de régions (150) compare les positions au point calculées des régions intérieure et extérieure et détermine la région digne d'intérêt.

3. Microscope selon la revendication 1, comprenant en outre :
une unité d'exposition (291) configurée pour exposer à une lumière de détection chacune des régions intérieure et extérieure ; et
un détecteur de lumière réfléchie (292) configuré pour détecter une lumière réfléchie de la lumière de détection à laquelle les régions intérieure et extérieure ont été exposées,
dans lequel
l'unité de détermination de régions (150) détermine si la lumière réfléchie, réfléchie par la région de l'air, est comprise dans la lumière réfléchie de chacune des régions intérieure et extérieure, détectée par le détecteur de lumière réfléchie, et détermine la région digne d'intérêt à partir d'un résultat de la détermination.

4. Procédé pour acquérir des images d'un spécimen, consistant à :
exposer à une lumière d'éclairage en fond noir une préparation dans laquelle un spécimen (190) est encapsulé entre une lamelle porte-objet (160) et une lamelle couvre-objet (161) au moyen d'un agent d'encapsulation (165) ;
prendre une image vignette en fond noir (200) de la préparation exposée à la lumière d'éclairage en fond noir ; et
détecter, à l'aide d'une unité de détermination de régions (150), une limite (55) entre l'agent d'encapsulation (165) et l'air (50) compris entre la lamelle porte-objet et la lamelle couvre-objet à partir de l'image vignette en fond noir prise, ladite limite divisant l'image vignette en fond noir en une région fermée (57) et une région ouverte (58) ;
comparer une région intérieure de la région fermée et une région extérieure et déterminer l'une ou l'autre région comme une région digne d'intérêt (195) et l'autre région comme une région de lame d'air (51) ;
subdiviser l'image vignette en fond noir en segments (ST205 ; ST305 ; ST405 ; ST505) ; et
acquérir une image agrandie successivement pour chaque segment, la mise au point s'effectuant indépendamment pour chaque segment en fonction de ce qui suit :
si la région digne d'intérêt et la région de lame d'air sont présentes sous forme mixte dans le segment, exclure alors la région de lame d'air de la région de détection de mise au point (ST206-209 ; ST306-309 ; ST406, ST207-209 ; ST506, ST307-309),
si seule la région digne d'intérêt est présente dans le segment, effectuer alors la mise au point sans aucune spécificité régionale (ST210-213 ; ST310-313 ; ST410-413 ; ST510-513), et
si la région digne d'intérêt n'est pas présente dans le segment, ne pas acquérir alors une image agrandie de ce segment (ST211 ; ST311 ; ST211 ; ST311).

5. Programme pour amener un microscope équipé d'un ordinateur à exécuter un traitement consistant à :
exposer à une lumière d'éclairage en fond noir une préparation dans laquelle un spécimen (190) est encapsulé entre une lamelle porte-objet (160) et une lamelle couvre-objet (161) au moyen d'un agent d'encapsulation (165) ;
prendre une image vignette en fond noir (200) de la préparation exposée à la lumière d'éclairage en fond noir ; et
détecter, à l'aide d'une unité de détermination de régions (150), une limite (55) entre l'agent d'encapsulation (165) et l'air (50) compris entre la lamelle porte-objet et la lamelle couvre-objet à partir de l'image vignette en fond noir prise, ladite limite divisant l'image vignette en fond noir en une région fermée (57) et une région ouverte (58) ;
comparer une région intérieure de la région fermée et une région extérieure et déterminer l'une ou l'autre région comme une région digne d'intérêt (195) et l'autre région comme une région de lame d'air (51) ;
subdiviser l'image vignette en fond noir en segments (ST205 ; ST305 ; ST405 ; ST505) ; et
acquérir une image agrandie successivement pour chaque segment, la mise au point s'effectuant indépendamment pour chaque segment en fonction de ce qui suit :
si la région digne d'intérêt et la région de lame d'air sont présentes sous forme mixte dans le segment, exclure alors la région de lame d'air de la région de détection de mise au point (ST206-209 ; ST306-309 ; ST406, ST207-209 ; ST506, ST307-309),
si seule la région digne d'intérêt est présente dans le segment, effectuer alors la mise au point sans aucune spécificité régionale (ST210-213 ; ST310-313 ; ST410-413 ; ST510-513), et
si la région digne d'intérêt n'est pas présente dans le segment, ne pas acquérir alors une image agrandie de ce segment (ST211 ; ST311 ; ST211 ; ST311).
